# EUROPÄISCHE PATENTSCHRIFT

(11) **EP 3 697 596 B1**
(45) Veröffentlichungstag und Bekanntmachung des Hinweises auf die Patenterteilung: **27.12.2023**
(21) Anmeldenummer: 18795331.0
(22) Anmeldetag: 18.10.2018
(51) Int. Cl.: B29C 64/153, B29C 64/141, B29C 64/264

(54) **3D-SCHMELZDRUCKVERFAHREN UND ANORDNUNG**
3D HOT-MELT PRINTING PROCESS AND ARRANGEMENT
PROCÉDÉ D'IMPRESSION THERMOFUSIBLE 3D ET DISPOSITIF

(30) Priorität: 18.10.2017 DE 102017124270; 11.01.2018 DE 102018100508
(43) Veröffentlichungstag der Anmeldung: 26.08.2020
(73) Patentinhaber: VALUE & INTELLECTUAL PROPERTIES MANAGEMENT GMBH, 83052 Bruckmühl/Heufeld (DE)
(72) Erfinder: BÄR, Kai K.O., 83043 Bad Aibling (DE); GEITNER, Andreas, 83700 Rottach-Egern (DE)
(74) Vertreter: Meissner Bolte Partnerschaft mbB
(86) Internationale Anmeldenummer: PCT/EP2018/078552
(87) Internationale Veröffentlichungsnummer: WO 2019/077044

(56) Entgegenhaltungen:
- EP-A1- 3 222 410
- WO-A1-2017/069752

## Beschreibung

Die Erfindung betrifft ein 3D-Schmelzdruckverfahren zur Herstellung eines räumlichen Produkts im Wesentlichen aus einem Polymer-Pulver oder Polymer-Filamenten, wobei das Produkt schichtweise durch Aufbringen von Polymer-Lagen auf eine jeweils vorab erzeugte Schicht und selektive lokale Erhitzung vorgegebener Punkte der Lage über eine Sinter- oder Schmelztemperatur des Pulvers und Verschmelzung der aufgeschmolzenen Punkte mit der darunterliegenden Schicht aufgebaut wird und wobei eine Vor-Erwärmung des vorhandenen Teil-Produktes bis auf eine Temperatur nahe der Sinter- oder Schmelztemperatur durch eine zusätzliche Heizeinrichtung bewirkt wird. Sie betrifft des Weiteren eine Anordnung zur Durchführung eines solchen Verfahrens.

In den letzten Jahren wurde eine Vielzahl von Verfahren zum schichtweisen Aufbau räumlicher Produkte entwickelt, die unter den Begriffen "additive Fertigung" oder "3D-Druck" zusammengefasst werden. Diese Verfahren beruhen teilweise auf Schmelz- und Erstarrungsschritten und schließen dann eine selektive lokale Erhitzung von vorher aufgebrachten Material-Lagen ein, die hier auch als "punktweise" oder "punktweise abtastende" Erhitzung bezeichnet wird. Hierfür wird üblicherweise ein koordinatengesteuert über den Material-Lagen verfahrbarer Bearbeitungslaser eingesetzt; grundsätzlich kommen aber auch andere Bestrahlungseinheiten in Betracht.

Bei einer speziellen Verfahrensführung wird mittels eines Tintenstrahldruckers punktweise ein den Absorptionsgrad der jeweils zuletzt aufgebrachten Material-Lage erhöhendes Mittel aufgetragen, und danach erfolgt eine Bestrahlung mit einer Strahlung solcher Wellenlänge, dass die Erhitzung über die Schmelztemperatur des Materials unter Nutzung der absorptionserhöhenden Wirkung bewirkt wird.

Im Interesse eines schnellen Ablaufes des sequentiellen lokalen Aufschmelzens der Material-Lagen, insbesondere Pulver-Lagen und damit einer hohen Produktivität des Verfahrens wird der Arbeitstisch bzw. das bereits gefertigte Teil-Produkt mittels konventioneller Heiztechniken auf eine Temperatur nahe der Schmelztemperatur vor-erwärmt. Beispielsweise kann der gesamte Prozess in einer beheizten Kammer ausgeführt werden, oder am Arbeitstisch sind konventionelle Heizstrahler vorgesehen, die mittel- oder langwellige Infrarotstrahlung emittieren.

Die bekanntermaßen zur Vor-Erwärmung eingesetzten Heizverfahren bewirken im Wesentlichen eine Volumen-Erwärmung und haben aufgrund dessen gewisse Nachteile. Hierzu zählen die prinzipbedingte Verzögerung des Wiedererstarrens der sequentiell aufgeschmolzenen Materialbereiche, die sich auf die Produktivität des Verfahrens negativ auswirkt, und das Auftreten potentiell qualitätsmindernder Unebenheiten der (Teil-)Produktoberfläche. Zudem ist der Energieverbrauch relativ hoch.

Aus der WO 2017/069752 A1 sind ein 3D-Schmelzdruckverfahren mit den Merkmalen des Oberbegriffs von Anspruch 1 und eine Anordnung zur Ausführung eines solchen Verfahrens bekannt. Die EP 3 222 410 A1 offenbart ein 3D-Schmelzdruckverfahren unter Einsatz langwelliger IR-Strahlung mit einer Leistungsdichte von 2-3 kW/m² zur Erhitzung einer jeweils vorab aufgetragenen Ausgangsmaterial-Lage.

Der Erfindung liegt die Aufgabe zu Grunde, ein verbessertes Verfahren der gattungsgemäßen Art und eine Anordnung für dessen Durchführung anzugeben, mit denen eine hohe Produktivität bei gleichzeitiger Erfüllung hoher Qualitätsanforderungen und moderatem Energieverbrauch erreicht werden kann.

Diese Aufgabe wird in ihrem Verfahrensaspekt durch ein 3D-Schmelzdruckverfahren mit den Merkmalen des Anspruchs 1 und in ihrem Vorrichtungsaspekt durch eine Anordnung mit den Merkmalen des Anspruchs 8 gelöst. Zweckmäßige Fortbildungen des Erfindungsgedankens sind Gegenstand der abhängigen Ansprüche.

Es ist ein Gedanke der vorliegenden Erfindung, die erforderliche Vor-Erwärmung vor dem lokalen, "punktweisen" Aufschmelzen neu aufgetragener Material-Lagen auf die tatsächlich zu bearbeitenden Bereiche des entstehenden Produkts zu konzentrieren. Ein weiterer Gedanke der Erfindung ist es, dies durch den Einsatz einer Strahlung mit relativ geringer Eindringtiefe, nämlich von naher IR-Strahlung (auch als NIR-Strahlung bekannt), insbesondere mit einem Strahlungsdichtemaximum im Wellenlängenbereich zwischen 0,77 und 1,2 µm, zu erreichen. Schließlich schließt die Erfindung den Gedanken ein, diese selektiv wirkende Strahlung mit relativ hoher Leistungsdichte, oberhalb von 200 kW/m², einzusetzen.

In einer praktisch bedeutsamen Ausführung wird als Polymer-Pulver ein thermoplastisches Polymerpulver eingesetzt. Grundsätzlich kann das Verfahren aber auch mit anderen aufschmelzbaren Polymeren, in Pulverform oder Filament-Form oder auch als Granulat, ausgeführt werden.

Insbesondere wird in vorteilhafter Weise bei Nutzung naher IR-Strahlung zur Vor-Erwärmung der Polymer-Lage eine Temperaturdifferenz von 20K oder mehr, insbesondere von 25K oder mehr, zur Sinter- oder Schmelztemperatur realisiert. Je nach konkreter Verfahrensführung kann die Vor-Erwärmung auch auf noch deutlich niedrigere Vorwärmtemperaturen limitiert werden.

Die Erfindung erbringt hiermit, mindestens in gewissen Ausführungsformen, mehrere erhebliche Vorteile gegenüber Verfahren nach dem Stand der Technik.

Insbesondere ermöglicht die Erwärmung im Wesentlichen nur der letzten Ausgangsmaterial-Lage unmittelbar vor dem lokalen Versintern bzw. Verschmelzen die Vermeidung großer Werkstückvolumina und ist somit grundsätzlich energiesparend und verringert die thermische Belastung der Gesamtvorrichtung.

Weiterhin reduziert das erfindungsgemäße Vorgehen die dauerhafte Einwirkung relativ hoher Temperaturen auf programmgemäß nicht versinterte oder verschmolzene Bereiche von in früheren Verfahrensschritten bearbeiteten Ausgangsmaterial-Lagen und somit unbeabsichtigte Erweichungen und Verschlechterungen des nicht versinterten Pulvers in jenen Lagen, was die Effizienz der Rückgewinnung von wiederverwertbarem Metallpulver nach der Fertigstellung eines Produkts deutlich verbessern kann.

Da erfindungsgemäß nämlich größere Temperaturdifferenzen zwischen den zu verschmelzenden und den nicht zu verschmelzenden "Punkten" der Pulver- oder Filamentschichten eingestellt werden können, werden solche unerwünschten Erweichungseffekte signifikant reduziert, wenn nicht gar völlig beseitigt. Ist es bei herkömmlichen Verfahren vielfach erforderlich, das fertige Produkt aufwändig von solchen anhaftenden Erweichungs-Bereichen zu säubern, kann auf solche Reinigungsschritte bei Anwendung der Erfindung weitestgehend verzichtet werden. Zudem kann weitgehend auf ein Sieben oder eine sonstige Aufbereitung des aus dem Prozess zurückgeführten Ausgangsmaterials verzichtet werden.

Ein weiterer, relativ unabhängiger Gedanke der Erfindung ist es, NIR-Strahlung zur lokalen Erhitzung der vor-erwärmten Materiallage über die Sinter- oder Schmelztemperatur einzusetzen, und zwar speziell bei Verfahrensführungen, in denen die erforderliche lokale Selektivität des Aufschmelzens durch eine punktuelle Vorab-Färbung bzw. -Dotierung gesichert wurde. Insbesondere kann zur lokalen Erhitzung über die Sinter- oder Schmelztemperatur nahe IR-Strahlung mit einem Strahlungsdichtemaximum zwischen 0,77 und 1,0 µm eingesetzt werden.

In einer zweckmäßigen Kombination der beiden relativ unabhängigen Grundgedanken der Erfindung ist vorgesehen, dass die Vor-Erwärmung der neu aufgebrachten Polymer-Lage einerseits und die lokale Erhitzung über die Sinter- oder Schmelztemperatur, also der eigentliche Sinter- bzw. Verschmelzungsschritt, andererseits jeweils mit naher IR-Strahlung mit individuell eingestelltem Strahlungsdichtemaximum und/oder individuell eingestellter Leistungsdichte ausgeführt werden.

In einer Ausführung wird die nahe IR-Strahlung sequentiell abschnittsweise in Teilabschnitte der Gesamtfläche der jeweiligen Polymer-Lage eingestrahlt, wobei die selektive lokale Erhitzung über die Sinter- oder Schmelztemperatur jeweils für vorgegebene Punkte innerhalb eines vor-erwärmten Teilabschnittes vorgenommen wird. Die Vor-Erwärmung "läuft" also gewissermaßen vorbereitend und begleitend mit der lokalen Erhitzung über die Sinter- oder Schmelztemperatur über die Oberfläche der jeweils zu behandelnden Material-Lage hinweg.

In zweckmäßigen Ausgestaltungen des Verfahrens liegt die Leistungsdichte der flächig eingestrahlten nahen IR-Strahlung im Bereich zwischen 500 kW/m² und 2 MW/m², und es wird erfindungsgemäß als nahe IR-Strahlung die Strahlung mindestens eines Halogenstrahlers, insbesondere einer Mehrzahl von Halogenstrahlern, mit einer Strahlertemperatur von mehr als 2700K, insbesondere bis 3100K, genutzt.

Ähnlich wie bei konventionellen Verfahren wird in einer weiteren Ausführung die selektive lokale Erhitzung vorgegebener Punkte durch Abtasten der Polymer-Lage mit einem Laserstrahl bewirkt. Grundsätzlich kann eine abtastende punktweise Erhitzung der zu bearbeitenden Material-Lage aber auch durch andere fokussierte Strahlung, etwa mittels Laserdioden, erfolgen.

In einer weiteren Ausführung wird die selektive lokale Erhitzung durch punktweisen Auftrag eines den Absorptionsgrad erhöhenden Mittels auf die Polymer-Lage und anschließende Einstrahlung von naher IR-Strahlung oder von Lichtstrahlung im langwelligen sichtbaren Bereich bewirkt. Bei diesem Prinzip wird die "punktweise" Erhitzung über die Sinter- oder Schmelztemperatur also nicht oder jedenfalls nicht ausschließlich durch eine sequentiell die Material-Lage punktweise abtastende hochfokussierte Strahlung bewirkt, sondern durch die selektive Erhöhung des Absorptionsgrades der Material-Lage sichergestellt. Bei dem absorptionserhöhenden Mittel handelt es sich insbesondere um eine stark pigmentierte Flüssigkeit, die auch als Tinte bezeichnet werden kann.

Hierbei kann dann insbesondere als Strahlung zur selektiven lokalen Erhitzung der dotierten Punkte/Bereiche die nahe IR-Strahlung genutzt werden, und das den Absorptionsgrad erhöhende Mittel ist an die nahe IR-Strahlung angepasst ausgewählt. Dies ist so zu verstehen, dass ein Mittel mit hohem Absorptionsvermögen speziell im Wellenlängenbereich zwischen 0,77 und 1,2 µm selektiv auf die Material-Lage aufgetragen wird.

3D-Schmelzdruckverfahren unter Einsatz schwarzer Tinten sind an sich bekannt. Im Rahmen der vorliegenden Erfindung wird durch den Einsatz von NIR-Strahlung zur lokalen ("punktuellen") Erhitzung der mit der Tinte markierten Bereiche auch der Einsatz farbiger, also nicht-schwarzer, Tinten möglich. Die besonderen Eigenschaften der NIR-Strahlung erbringen auch für mit farbigen Pigmenten bzw. Farbstoffen gefärbte Tinten eine ausreichende Selektivität der Erhitzung gegenüber nicht markierten Bereichen.

Dies wiederum bietet dem Entwerfer wesentlich größere Freiheiten in der Farbgestaltung des Produktes, weil zwischen den einzelnen Materiallagen nicht mehr notwendigerweise schwarze Tintenschichten liegen. Damit wird es einerseits möglich, einfarbige Produkte in brillanten Farben mittels des erfindungsgemäßen Verfahrens herzustellen, andererseits können aber auch durch Auftrag von Tinten mit verschiedenen Farben in verschiedenen Schichten oder sogar innerhalb einer Schicht gezielt mehrfarbige Produkte aufgebaut werden.

Der Einsatz der NIR-Strahlung zur Erhitzung von mit einem absorptionserhöhenden Mittel markierten Bereichen ermöglicht weiterhin den Einsatz leitfähiger, also in erheblichem Grade mit Metallpulver gefüllter Tinten. Bei deren Bestrahlung bleibt nach Verdampfung des Lösungsmittels ein metallischer Bereich (in der praktischen Ausführung insbesondere als metallische Spur) auf der Oberfläche der Kunststoffschicht zurück. Hierdurch lassen sich also mehrschichtige Leiterstrukturen in Art von Mehrschichten-Leiterplatten oder jedenfalls in einen Kunststoffkörper eingebettete strukturierte Leiterschichten erzeugen.

Vorteilhafte Ausführungen der vorgeschlagenen Anordnung ergeben sich für den Fachmann weitgehend aufgrund der vorstehend erläuterten Verfahrensaspekte, so dass von ausführlichen Erläuterungen weitgehend Abstand genommen wird. Es wird jedoch auf folgende Vorrichtungsaspekte hingewiesen:
Während der Aufbau der Gesamtanordnung weitgehend dem bekannter 3D-Drucker entspricht, deren Funktion auf dem sequentiellen lokalen Aufschmelzen von schichtweise aufgetragenen Kunststoffpulvern oder -filamenten beruht, besteht eine Besonderheit in der Ausgestaltung der Vorerwärmungseinrichtung und/oder der eigentlichen Schmelz-Einrichtung. Diese weist eine NIR-Bestrahlungseinrichtung zur Einstrahlung von naher IR-Strahlung, mit einem Strahlungsdichtemaximum im Wellenlängenbereich zwischen 0,77 und 1,2 µm, mit hoher Leistungsdichte oberhalb von 200 kW/m² auf eine vorbestimmte Fläche im Bereich des Arbeitstisches auf. Die Formulierung "im Bereich des Arbeitstisches" ist in einem allgemeinen Sinne zu verstehen und bedeutet nicht notwendigerweise, dass die NIR-Bestrahlungseinrichtung senkrecht über dem Arbeitstisch platziert ist, und auch nicht, dass ihre laterale Erstreckung mit derjenigen des Arbeitstisches übereinstimmt. Bei geeigneter Reflektorgeometrie kann die NIR-Bestrahlungseinrichtung eine kleinere Grundfläche als der Arbeitstisch haben und auch schräg über diesem oder sogar seitlich von diesem positioniert sein.

Erfindungsgemäß weist die NIR-Bestrahlungseinrichtung mindestens einen linearen Halogenstrahler, insbesondere eine Mehrzahl von Halogenstrahlern, mit derart zugeordnetem Reflektor auf, dass die Strahlung des oder jedes Infrarotstrahlers in Richtung auf den Arbeitstisch konzentriert wird.

In einer weiteren Ausgestaltung ist die Mehrzahl von Halogenstrahlern mit zugeordnetem Reflektor stationär (allenfalls höhenverstellbar) über dem Arbeitstisch angebracht. Dem gegenüber bevorzugt ist jedoch, dass die Mehrzahl von Halogenstrahlern mit zugeordnetem Reflektor in mindestens einer Achsenrichtung einer XY-Ebene positionsgesteuert verfahrbar über dem Arbeitstisch angebracht ist. Diese letztere Ausführung dient der Realisierung einer Verfahrensführung, bei der die Vor-Erwärmung jeweils nur für einen konkret zu bearbeiten Teil-Oberflächenabschnitt des im Entstehen begriffenen Produkts ausgeführt wird und dieser Bereich über die zu bearbeitende Oberfläche "wandert".

In an sich bekannter Weise können die Mittel zum Bewirken einer selektiven lokalen Erhitzung vorgegebener Punkte einer vorab aufgebrachten Polymer-Lage (nachfolgend als "Schmelz-Einrichtung" bezeichnet) einen Laser mit nachgeschaltetem Scanner zur punktweisen Einstrahlung von naher NIR-Strahlung oder sichtbaren Licht im langwelligen Bereich auf die vorgegebenen Punkte aufweisen.

Alternativ oder auch in Kombination mit der vorgenannten Ausführung kann der Schmelz-Einrichtung ein koordinatengesteuert verfahrbarer Tintenstrahldrucker zum punktweisen Auftragen eines absorptionserhöhenden Mittels auf die vorgegebenen Punkte aufweisen. Wie bereits weiter oben erwähnt, kann die ein punktuelles Aufschmelzen bewirkende Strahlung dann durch eine Bestrahlungseinheit erzeugt sein, deren Strahlung nicht auf einzelne Punkte der zu bearbeitenden Oberfläche fokussiert wird, beispielsweise durch die zur Vor-Erwärmung dienende NIR-Bestrahlungseinheit selbst. Beispielsweise kann ein Teil der Strahlung dieser NIR-Bestrahlungseinheit ausgekoppelt und im Rahmen eines Überstreichens der Werkstückoberfläche zeitlich etwas verzögert auf die vor-erwärmten Abschnitte gerichtet werden, oder es ist eine zusätzliche NIR-Bestrahlungseinheit für das Erhitzen über die Sinter- bzw. Schmelztemperatur vorgesehen.

Bei der oben erwähnten Verfahrensgestaltung mit farbigen Tinten können an sich bekannte Tintenstrahldrucker mit mehreren Tanks zur Aufnahme von Tinten mit verschiedenen Farben zum Einsatz kommen, um (durchaus im Rahmen der üblichen Steuerung derartiger Drucker) gegebenenfalls mehrfarbige "Bilder" auf die Oberfläche einer jeweils vorher aufgebrachten Ausgangsmaterial-Lage aufzutragen, wodurch schrittweise farbig strukturierte Kunststoffprodukte aufgebaut werden können.

Bei einer ebenfalls weiter oben erwähnten Verfahrensgestaltung unter Einsatz leitfähiger Tinten ist der eingesetzte Tintenstrahldrucker derart adaptiert, dass er ohne weiteres mit leitfähigen Flüssigkeiten funktioniert.

In einer zweckmäßigen konstruktiven Ausführung gemäß diesem Aspekt können der Tintenstrahldrucker und je eine in dessen Verfahr-Richtung über dem Arbeitstisch vor- und nachgeschaltete NIR-Bestrahlungseinrichtung zu einem in einer Achsenrichtung einer XY-Ebene über dem Arbeitstisch verfahrbaren Schmelzeinrichtungs-Modul kombiniert sein. Noch spezieller können hierbei die selektive lokale Erhitzung vorgegebener Punkte durch punktweisen Auftrag eines den Absorptionsgrad erhöhenden Mittels auf die Polymer-Lage und anschließende Einstrahlung von naher IR-Strahlung bewirkt sein.

Vorteile und Zweckmäßigkeiten der Erfindung ergeben sich im Übrigen aus der nachfolgenden Beschreibung eines Ausführungsbeispiels anhand der Figuren. Von diesen zeigen:
Fig. 1 eine schematische Darstellung, in Art einer Längsschnittdarstellung einer nicht anspruchsgemäßen Anordnung und eines nicht anspruchsgemäßen Verfahrens,
Fig. 2 eine schematische Darstellung, in Art einer Längsschnittdarstellung, einer gegenüber Fig. 1 modifizierten Anordnung und eines entsprechenden Verfahrens, und
Fig. 3 eine schematische Darstellung, in Art einer Längsschnittdarstellung, einer Anordnung und eines entsprechenden Verfahrensgemäß einer Ausführungsform der Erfindung.

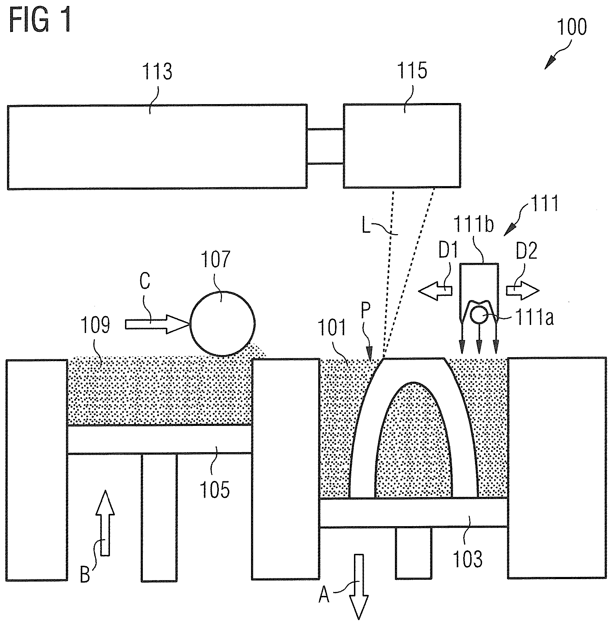

Fig. 1 zeigt skizzenartig eine Anordnung 100 zur additiven Fertigung eines (hier noch unvollständig gezeigten) räumlichen Kunststoffprodukts P, das mittels schichtweisem Auftrag von Kunststoffpulver und abtastender lokaler Erhitzung der einzelnen Schichten aus einem Kunststoffpulver-Bett 101 gebildet wird.

Die Anordnung umfasst einen Arbeitstisch 103, auf dem schichtweise das Kunststoffpulverbett 101 aufgebracht und das Produkt P gebildet wird. Wie durch den Pfeil A symbolisiert, ist der Arbeitstisch 103 vertikal verfahrbar, um die Oberfläche des Kunststoffpulver-Bettes 101 trotz dessen mit dem Schichtauftrag anwachsender Höhe auf gleichem Höhenniveau zu halten. Eine Pulverauftragsvorrichtung zur Zuführung von Kunststoffpulver in den eigentlichen Arbeitsbereich umfasst einen Stempel 105, der in Richtung des Pfeils B, also in Gegenrichtung zum Pfeil A vertikal verfahrbar ist, und eine Pulverauftragswalze 107, die in Richtung des Pfeils C bewegbar ist und auf dem Stempel 105 als Vorrat aufgenommenes Kunststoffpulver 109 jeweils in einzelnen Lagen vorbestimmter Dicke in den Arbeitsbereich (also in der Figur nach rechts in das Pulverbett 101) verschiebt.

Oberhalb des Arbeitsbereiches ist eine NIR-Bestrahlungseinheit 111, die im Beispiel durch eine einzelne Halogenlampe 111a und einen zugehörigen Reflektor 111b gebildet ist, positioniert. Die NIR-Bestrahlungseinheit 111 ist, wie mit den Pfeilen D1 und D2 symbolisiert, lateral über das Pulverbett 101 hin und her bewegbar und dient zur Vor-Erwärmung der jeweils bestrahlten Abschnitte des Pulverbettes auf eine Temperatur von ca. 25 - 30 K unterhalb einer Sinter- oder Schmelztemperatur des Kunststoffpulvers. Die NIR Bestrahlungseinheit 111 kann auch mehrere Halogenlampen mit einem dann entsprechend angepasst ausgeformten Reflektor umfassen.

Ein kommerzieller Bearbeitungslaser 113, der im Hinblick auf die Absorptionseigenschaften des zu verarbeitenden Kunststoffpulvers und natürlich unter Kostenaspekten ausgewählt ist, mit nachgeschaltetem Scanner 115 ist oberhalb des Arbeitsbereiches angeordnet. Der Laser 113 und Scanner 115 sind derart ausgebildet, dass die Oberfläche des Pulverbettes 101 mit einem Laserstrahl L abgerastert werden kann, um das durch die NIR-Strahlung an seiner Oberfläche vor-erwärmte Pulverbett 101 an den gemäß der Produktgeometrie vorbestimmten Auftreffpunkten über die Sinter- bzw. Schmelztemperatur zu erhitzen. Hierdurch wird an jenen Stellen ein Versintern mit der jeweils darunterliegenden Schicht bewirkt und somit die nächste Schicht des Produkts P ausgebildet. In üblicher Weise verbleibt das Kunststoffpulver 109 an jenen Stellen, an denen es nicht über die Sinter- bzw. Schmelztemperatur erhitzt wurde, im Pulver-Zustand und fällt nach dem Entnehmen vom Arbeitstisch vom Produkt P ab bzw. kann aus diesem ausgewaschen werden.

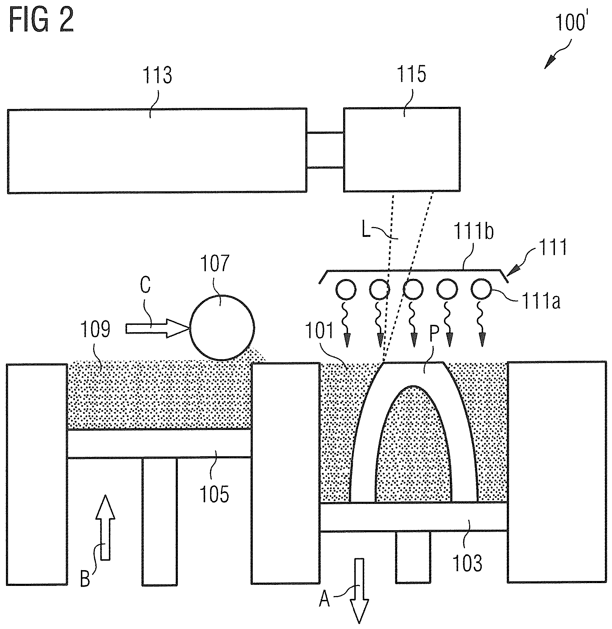

Fig. 2 zeigt eine weitestgehend der Anordnung 100 nach Fig. 1 ähnliche Anordnung 100', bei der die übereinstimmenden Teile mit den gleichen Bezugsziffern wie in Fig. 1 bezeichnet sind und hier nicht nochmals erläutert werden. Der wesentliche Unterschied zur Anordnung 100 besteht darin, dass anstelle einer lateral verfahrbaren NIR-Bestrahlungseinrichtung hier eine stationäre NIR-Bestrahlungseinrichtung 111' mit einem einfachen großflächigen Reflektor 111b und einer darunter angeordneten Reihe von Halogenlampen 111a vorgesehen ist. Es versteht sich, dass die relative Anordnung von Laser 113 und Scanner 115 einerseits und der NIR-Bestrahlungseinrichtung 111 derart zu bestimmen ist, dass die Strahlung beider Bestrahlungseinheiten ungehindert auf die gesamte zu bearbeitende Oberfläche des Pulverbettes 101 gelangen kann.

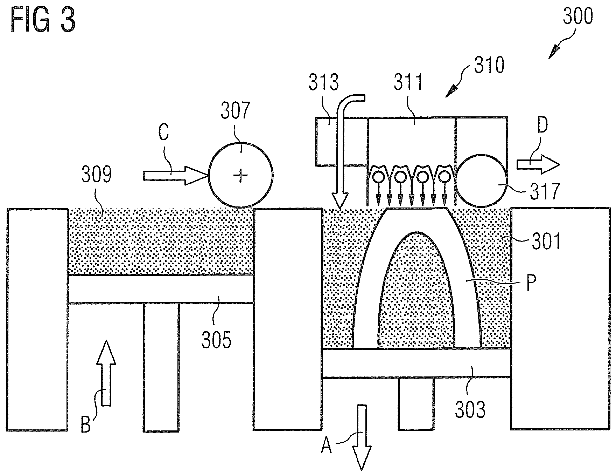

Auch Fig. 3 zeigt eine teilweise der Anordnung nach Fig. 1 ähnliche Anordnung 300; es gibt hier jedoch deutlichere Abweichungen als bei der Anordnung 100' nach Fig. 2. Während die konstruktive Ausführung des Arbeitsbereiches und der Pulverzuführung mit derjenigen nach Fig. 1 und 2 übereinstimmt, ist die Bereitstellung der zur thermischen Bearbeitung des Kunststoffpulvers benötigten Strahlung anders gelöst.

Hierzu ist ein Kombinations-Bearbeitungsmodul 310 vorgesehen, welches neben einer NIR-Vorwärmungseinrichtung 311 mit einer Mehrzahl von (hier nicht einzeln bezeichneten Halogenstrahlern und Reflektorabschnitten) eine weitere NIR-Bestrahlungseinheit 313 sowie eine Druckwalze 317 umfasst. Das Kombinations-Bearbeitungsmodul 10 wird in Richtung des Pfeils D über das Pulverbett 301 auf dem Arbeitstisch 303 bewegt, wobei zunächst die jeweils oberste Lage des Kunststoffpulvers mit einem Muster aus einem absorptionserhöhenden Mittel versehen, anschließend vor-erwärmt und schließlich nur in den bedruckten Bereichen mittels der weiteren NIR-Bestrahlungseinheit 313 auf eine Temperatur oberhalb der Sinter- bzw. Schmelztemperatur erwärmt wird.

Der finale Strahlungseintrag in die Oberfläche des Pulverbettes 301 ist hier flächig, also nicht punktweise, und bewirkt nur dort eine punktweise Überschreitung der materialspezifischen Sinter- bzw. Schmelztemperatur, wo in einem vorgeschalteten weiteren Verfahrensschritt auf die zu sinternden bzw. zu schmelzenden Punkte bzw. Bereiche der obersten Pulver-Lage selektiv ein absorptionserhöhendes Mittel aufgetragen wurde. Dieser Auftrag geschieht beim dargestellten Beispiel mit einer Druckwalze, in der Praxis jedoch zweckmäßigerweise mittels eines vor dem Kombinations-Bearbeitungsmodul über die Oberfläche des Pulverbettes geführten Tintenstrahldrucker.

Die NIR-Vorwärmungseinrichtung 311 und die weitere NIR-Bestrahlungseinheit 313 können grundsätzlich gleichartig aufgebaut sein, und dies bietet insbesondere dann Vorteile, wenn das Kombinations-Bearbeitungsmodul 310 (in einer hinsichtlich des Pulverauftrags auf das im Entstehen begriffene Werkstück modifizierten Anordnung) hin- und hergehend Arbeitstakte ausführt. Dann sind die beiden NIR-Bestrahlungseinrichtungen abwechselnd als Vorwärm- und Schmelzeinrichtung wirksam und müssen entsprechend variabel konfiguriert sein. Die Einstellung spezifischer Strahlungsparameter (Lage des Strahlungsdichtemaximums, Leistungsdichte, gegebenenfalls Fokussierungsbereich...) erfolgt dann jeweils auf Einzelschritt-Basis durch variierende Ansteuerung der Halogenstrahler und gegebenenfalls auch eine Variation der Reflektorgeometrie.

## Patentansprüche

1. 3D-Schmelzdruckverfahren zur Herstellung eines räumlichen Produkts (P) im Wesentlichen aus einem Polymer-Pulver (109) oder Polymer-Filamenten,
wobei das Produkt schichtweise durch Aufbringen von Polymer-Lagen aus Pulver bzw. Filament auf eine jeweils vorab erzeugte Schicht und selektive lokale Erhitzung vorgegebener Punkte der Lage über eine Sinter- oder Schmelztemperatur des Pulvers oder der Filamente und Versinterung oder Verschmelzung der aufgeschmolzenen Punkte mit der darunterliegenden Schicht aufgebaut wird/werden,
wobei die jeweils neu aufgebrachte Polymer-Lage und optional mindestens eine darunterliegende Schicht durch flächige oder wandernde Einstrahlung von IR-Strahlung auf eine Temperatur mit vorbestimmter Differenz zur Sinter- oder Schmelztemperatur vor-erwärmt wird,
wobei die Vor-Erwärmung mindestens der neu aufgebrachten Polymer-Lage und/oder die lokale Erhitzung über die Sinter- oder Schmelztemperatur mittels naher IR-Strahlung mit einem Strahlungsdichtemaximum im Wellenlängenbereich zwischen 0,77 und 1,2 µm und mit hoher Leistungsdichte oberhalb von 200 KW/m² ausgeführt wird und wobei als nahe IR-Strahlung die Strahlung mindestens eines linearen Halogenstrahlers, insbesondere einer Mehrzahl von Halogenstrahlern (313), mit einer Strahlertemperatur von mehr als 2700K, insbesondere bis 3100K, genutzt wird.

2. 3D-Schmelzdruckverfahren nach Anspruch 1, wobei bei Nutzung naher IR-Strahlung zur Vor-Erwärmung der Polymer-Lage eine Temperaturdifferenz von 20K oder mehr zur Sinter- oder Schmelztemperatur realisiert wird.

3. 3D-Schmelzdruckverfahren nach einem der vorangehenden Ansprüche, wobei die nahe IR-Strahlung sequentiell abschnittsweise in Teilabschnitte der Gesamtfläche der jeweiligen Polymer-Lage eingestrahlt wird, wobei die selektive lokale Erhitzung über die Sinter- oder Schmelztemperatur jeweils für vorgegebene Punkte innerhalb eines vor-erwärmten Teilabschnittes vorgenommen wird.

4. 3D-Schmelzdruckverfahren nach einem der vorangehenden Ansprüche, wobei die selektive lokale Erhitzung vorgegebener Punkte durch punktweisen Auftrag eines den Absorptionsgrad erhöhenden Mittels, insbesondere in Tintenform, auf die Polymer-Lage und anschließende Einstrahlung von naher IR-Strahlung bewirkt wird, wobei insbesondere das den Absorptionsgrad erhöhende Mittel an die nahe IR-Strahlung angepasst ausgewählt ist.

5. 3D-Schmelzdruckverfahren nach Anspruch 4, wobei im Zuge des Aufbaus des räumlichen Produkts (P) aus Polymer-Lagen verschiedene den Absorptionsgrad erhöhende Mittel mit unterschiedlichen Farben zum Einsatz kommen, oder bereichsweise innerhalb einzelner Schichten oder für verschiedene Schichten in ihrer Gesamtheit Mittel mit unterschiedlichen Farben eingesetzt werden.

6. 3D-Schmelzdruckverfahren nach Anspruch 4 oder 5, wobei das den Absorptionsgrad erhöhende Mittel eine metallische Füllung aufweist, derart, dass beim Aufbringen mindestens einiger Polymer-Lagen metallisch leitfähige Bereiche, insbesondere leitfähige Spuren, eingelagert werden.

7. 3D-Schmelzdruckverfahren nach einem der Ansprüche 4 bis 6, wobei die Vor-Erwärmung der neu aufgebrachten Polymer-Lage einerseits und die lokale Erhitzung über die Sinter- oder Schmelztemperatur andererseits jeweils mit naher IR-Strahlung mit individuell eingestelltem Strahlungsdichtemaximum und/oder individuell eingestellter Leistungsdichte ausgeführt werden.

8. Anordnung zur Durchführung des Verfahrens nach einem der vorangehenden Ansprüche, welche aufweist:
einen Arbeitstisch als Unterlage zum schichtweisen Aufbau des räumlichen Produkts,
eine Pulverauftragsvorrichtung zum sequentiellen Auftrag von Polymer-Lagen eines Polymer-Pulvers bzw. von Polymer-Filamenten im Bereich des Arbeitstisches,
eine Vorerwärmungseinrichtung zur Vor-Erwärmung jeder neuen Polymer-Lage, die eine IR-Bestrahlungseinrichtung zur Einstrahlung von IR-Strahlung auf eine vorbestimmte Fläche im Bereich des Arbeitstisches aufweist, und
eine Schmelz-Einrichtung zum Bewirken einer selektiven lokalen Erhitzung vorgegebener Punkte der neuen Polymer-Lage über eine Sinter- oder Schmelztemperatur des Polymer-Pulvers,
wobei die Vor-Erwärmungseinrichtung (311) und die Schmelz-Einrichtung (313) eine NIR-Bestrahlungseinrichtung mit mindestens einem linearen Halogenstrahler, insbesondere einer Mehrzahl von Halogenstrahlern, zur Erzeugung und Einstrahlung naher IR-Strahlung mit einem Strahlungsdichtemaximum im Wellenlängenbereich zwischen 0,77 und 1,2 µm mit hoher Leistungsdichte oberhalb von 200 kW/m² auf die oberste Polymer-Lage aufweist.

9. Anordnung nach Anspruch 8, wobei der Schmelz-Einrichtung (313) ein koordinatengesteuert verfahrbarer Tintenstrahldrucker zum punktweisen Auftragen eines absorptionserhöhenden Mittels auf die vorgegebenen Punkte vorgeschaltet ist, wobei der Tintenstrahldrucker insbesondere mehrere Tintentanks zur Aufnahme von Tinten mit unterschiedlichen Farben umfasst und zur programmgesteuerten Auswahl eines der Tintentanks zum selektiven Auftragen einer der Tinten ausgebildet ist.

10. Anordnung nach Anspruch 8 oder 9, wobei die NIR-Bestrahlungseinrichtung (311, 313) mindestens einen linearen Halogenstrahler (111a), insbesondere eine Mehrzahl von Halogenstrahlern, mit derart zugeordnetem Reflektor aufweist, dass die Strahlung des oder jedes Infrarotstrahlers in Richtung auf die oberste Polymer-Lage konzentriert wird, wobei insbesondere die Mehrzahl von Halogenstrahlern mit zugeordnetem Reflektor (111b) in mindestens einer Achsenrichtung einer XY-Ebene positionsgesteuert verfahrbar über dem Arbeitstisch angebracht ist.

11. Anordnung nach Anspruch 9 oder 10, wobei der Tintenstrahldrucker und je eine in dessen Verfahr-Richtung über dem Arbeitstisch vor- und nachgeschaltete NIR-Bestrahlungseinrichtung zu einem in einer Achsenrichtung einer XY-Ebene über dem Arbeitstisch verfahrbaren Schmelzeinrichtungs-Modul kombiniert sind, wobei insbesondere die dem Tintenstrahldrucker vor- und nachgeschalteten NIR-Bestrahlungseinrichtungen im Wesentlichen gleichartig aufgebaut, aber in Abhängigkeit von der Bewegungseinrichtung des Schmelzeinrichtungs-Moduls hinsichtlich des Strahlungsdichtemaximums und/oder der Leistungsdichte differenziert steuerbar sind.

## Claims

1. 3D hot-melt printing process for producing a three-dimensional product (P) essentially from a polymer powder (109) or polymer filaments
wherein the product is built up layer-by-layer by applying polymer plies of powder or filament to a respective previously produced layer and by selective local heating predetermined points of the layer above a sintering or melting temperature of the powder or filaments and sintering or fusing the melted points with the underlying layer,
wherein the respective newly applied polymer ply and optionally at least one underlying layer is preheated to a temperature with a predetermined difference to the sintering or melting temperature by flat or migrating irradiation of short-wave or medium-wave IR radiation, wherein
the preheating of at least the newly applied polymer ply and/or the local heating above the sintering or melting temperature is carried out by means of near IR radiation, in particular with a radiation density maximum in the wavelength range between 0.77 and 1.2 µm and with high power density above 200 KW/m² and
wherein for local heating above the sintering or melting temperature near IR radiation with a radiation density maximum between 0.77 and 1.0 µm is used and wherein the radiation of at least one linear halogen radiator, in particular a plurality of halogen radiators (313) , with a radiator temperature of more than 2700K, in particular up to 3100K, is used as near IR radiation.

2. 3D hot-melt printing process according to claim 1 or 2, wherein a temperature difference of 20K or more to the sintering or melting temperature is realized when using near IR radiation for preheating the polymer ply.

3. 3D hot-melt printing process according to one of the preceding claims, wherein the near IR radiation is sequentially irradiated in sections into partial sections of the total area of the respective polymer ply, wherein the selective local heating above the sintering or melting temperature is carried out in each case for predetermined points within a preheated partial section.

4. 3D hot-melt printing process according to one of the preceding claims, wherein the selective local heating of predetermined points is effected by pointwise application of an agent increasing the absorption coefficient, especially in ink form, to the polymer ply and subsequent irradiation of near IR radiation, wherein in particular the agent increasing the absorption coefficient is selected to be adapted to the near IR radiation.

5. 3D hot-melt printing process according to claim 4, wherein in the course of the construction of the three-dimensional product (P) of polymer plies, various agents increasing the absorption coefficient with different colors are used, or agents with different colors are used in areas within individual layers or for different layers in their entirety.

6. 3D hot-melt printing process according to claim 4 or 5, wherein the agent increasing the absorption coefficient has a metallic filling, such that metallically conductive areas, in particular conductive tracks, are incorporated during the application of at least some polymer plies.

7. 3D hot-melt printing process according to claims 4 to 6, wherein the preheating of the newly applied polymer ply on the one hand and the local heating above the sintering or melting temperature on the other hand are each carried out with near IR radiation with individually set radiation density maximum and/or individually set power density.

8. Arrangement for carrying out the process according to one of the preceding claims, which comprises:
a worktable as a base for the layered construction of the three-dimensional product,
a powder application device for sequentially applying polymer plies of a polymer powder or polymer filaments in the area of the worktable,
a preheating device for preheating each new polymer ply, comprising an IR irradiation device for irradiating IR radiation onto a predetermined area in the region of the worktable, and
a melting device for effecting selective local heating of predetermined points of the new polymer ply above a sintering or melting temperature of the polymer powder,
wherein the preheating device (311) and/or the melting device (313) has an NIR irradiation device for generating and irradiating near IR radiation, in particular with a radiation density maximum in the wavelength range between 0.77 and 1.2 µm, with high power density, in particular above 200 kW/m₂, onto the uppermost polymer ply.

9. Arrangement according to claim 8, wherein an inkjet printer, which can be moved under coordinate control, is connected upstream of the melting device for pointwise application of an absorption-increasing agent to the predetermined points, wherein the inkjet printer in particular comprises a plurality of ink tanks for holding inks having different colors and is adapted for program-controlled selection of one of the ink tanks for selective application of one of the inks.

10. Arrangement according to one of claims 8 or 9, wherein the NIR irradiation device (311, 313) comprises at least one linear halogen radiator (111a), in particular a plurality of halogen radiators, with an associated reflector such that the radiation of the or each infrared radiator is concentrated in the direction of the uppermost polymer ply, wherein in particular the plurality of halogen radiators with associated reflector are mounted above the worktable so as to be movable in position-controlled manner in at least one axial direction of an XY plane.

11. Arrangement according to claim 9 or 10, wherein the inkjet printer and a respective NIR irradiation device connected upstream and downstream in the direction of travel thereof above the worktable are combined to form a melting device module which is movable in an axial direction of an XY plane above the worktable, wherein in particular the NIR irradiation devices upstream and downstream of the inkjet printer are constructed in essentially the same way, but can be controlled in a differentiated manner with respect to the maximum radiation density and/or the power density as a function of the movement device of the melting device module.

## Revendications

1. Procédé d'impression par fusion en 3D pour la fabrication d'un produit spatial (P) essentiellement d'une poudre de polymère (109) ou de filaments de polymère,
le produit étant constitué couche par couche par application de couches de polymère en poudre ou en filament sur une couche respective produite au préalable et chauffage local sélectif de points prédéterminés de la couche au-dessus d'une température de frittage ou de fusion de la poudre ou des filaments et frittage ou fusion des points fondus avec la couche sous-jacente,
la couche de polymère nouvellement appliquée et, en option, au moins une couche sous-jacente étant préchauffées à une température présentant une différence prédéterminée par rapport à la température de frittage ou de fusion, par une irradiation plane ou itinérante de rayonnement IR,
dans lequel
le préchauffage d'au moins la couche de polymère nouvellement appliquée et/ou le chauffage local au-dessus de la température de frittage ou de fusion est effectué Z IN au moyen d'un rayonnement IR proche avec un maximum de densité de rayonnement dans la plage de longueurs d'onde entre 0,77 et 1,2 µm et avec une densité de puissance élevée au-dessus de 200 KW/m² et dans lequel le rayonnement IR proche le rayonnement au moins d'un émetteur halogène linéaire, en particulier d'une pluralité d'émetteurs halogènes (313), avec une température d'émetteur de plus de 2700 K, en particulier jusqu'à 3100 K, est utilisée.

2. Procédé d'impression par fusion 3D selon la revendication 1, dans lequel une différence de température de 20K ou plus par rapport à la température de frittage ou de fusion est réalisée en utilisant un rayonnement IR proche pour préchauffer la couche de polymère.

3. Procédé d'impression par fusion 3D selon l'une des revendications précédentes, dans lequel le rayonnement IR proche est irradié séquentiellement par sections dans des sections partielles de la surface totale de la couche de polymère respective, le chauffage local sélectif au-dessus de la température de frittage ou de fusion étant effectué respectivement pour des points prédéterminés à l'intérieur d'une section partielle préchauffée.

4. Procédé d'impression 3D par fusion selon l'une des revendications précédentes, dans lequel le chauffage local sélectif de points prédéterminés est provoqué par l'application ponctuelle d'un agent augmentant le degré d'absorption, notamment sous forme d'encre, sur la couche de polymère, suivie d'une irradiation par un rayonnement IR proche, l'agent augmentant le degré d'absorption étant notamment choisi de manière adaptée au rayonnement IR proche.

5. Procédé d'impression 3D par fusion selon la revendication 4, dans lequel, au cours de la constitution du produit spatial (P) à partir de couches de polymère, on utilise différents agents augmentant le degré d'absorption avec différentes couleurs, ou on utilise par zones à l'intérieur de différentes couches ou pour différentes couches dans leur ensemble des agents avec différentes couleurs.

6. Procédé d'impression 3D par fusion selon la revendication 4 ou 5, dans lequel l'agent augmentant le degré d'absorption présente un remplissage métallique, de telle sorte que lors de l'application d'au moins quelques couches de polymère, des zones conductrices métalliques, en particulier des traces conductrices, sont intercalées.

7. Procédé d'impression 3D par fusion selon l'une des revendications 4 à 6, dans lequel le préchauffage de la couche de polymère nouvellement déposée, d'une part, et le chauffage local au-dessus de la température de frittage ou de fusion, d'autre part, sont respectivement réalisés avec un rayonnement IR proche avec un maximum de densité de rayonnement réglé individuellement et/ou une densité de puissance réglée individuellement.

8. Ordre de mise en oeuvre de la procédure selon l'un des revendications précédentes, qui comprend
une table de travail servant de support pour la construction par couches du produit spatial,
un dispositif d'application de poudre pour l'application séquentielle de couches de polymère d'une poudre de polymère ou de filaments de polymère dans la zone de la table de travail,
un dispositif de préchauffage pour préchauffer chaque nouvelle couche de polymère.
couche comprenant un dispositif d'irradiation IR pour irradier un rayonnement IR sur une surface prédéterminée dans la zone de la table de travail, et
un dispositif de fusion pour provoquer un chauffage local sélectif de points prédéterminés de la nouvelle couche de polymère au-dessus d'une température de frittage ou de fusion de la poudre de polymère,
dans lequel
le dispositif de préchauffage (311) et le dispositif de fusion (313) présentent un dispositif de rayonnement NIR avec au moins un émetteur halogène linéaire, en particulier une pluralité d'émetteurs halogènes, pour la production et l'irradiation d'un rayonnement IR proche avec un maximum de densité de rayonnement dans la plage de longueurs d'onde entre 0,77 et 1,2 µm avec une densité de puissance élevée au-dessus de 200 kW/m² sur la couche polymère supérieure.

9. Ordre de mise selon la revendication 8, dans lequel le dispositif de fusion (313) est doté d'un l'imprimante à jet d'encre comprend en particulier plusieurs réservoirs d'encre pour recevoir des encres de différentes couleurs et est conçue pour la sélection commandée par programme d'un des réservoirs d'encre pour l'application sélective d'une des encres.

10. Ordre de mise selon la revendication 8 ou 9, dans lequel le dispositif d'irradiation NIR (311, 313) comprend au moins un émetteur halogène linéaire (111a), en particulier une pluralité d'émetteurs halogènes, avec un réflecteur associé de telle sorte que le rayonnement de l'émetteur ou de chaque émetteur infrarouge est concentré en direction de la couche de polymère supérieure, en particulier la pluralité d'émetteurs halogènes avec un réflecteur associé (111b) est montée de manière mobile au-dessus de la table de travail dans au moins une direction axiale d'un plan XY, en étant commandée en position.

11. Ordre de mise selon la revendication 9 ou 10, dans lequel l'imprimante à jet d'encre et respectivement un dispositif d'irradiation NIR placé en amont et en aval dans sa direction de déplacement au-dessus de la table de travail sont combinés en un module de dispositif de fusion déplaçable dans une direction axiale d'un plan XY au-dessus de la table de travail, dans lequel, en particulier, les dispositifs d'irradiation NIR montés en amont et en aval de l'imprimante à jet d'encre sont construits essentiellement de la même manière, mais peuvent être commandés de manière différenciée en ce qui concerne le maximum de densité de rayonnement et/ou la densité de puissance en fonction du dispositif de déplacement du module de dispositif de fusion.
